# EUROPEAN PATENT APPLICATION

(11) **EP 4 617 538 A1**
(43) Date of publication of application: **17.09.2025**
(21) Application number: 23909129.1
(22) Date of filing: 19.07.2023
(51) Int. Cl.: F16L 13/02, F16L 21/00, F16L 37/08

(54) **WELDED QUICK-CONNECT FITTING, PIPING SYSTEM, AND PIPELINE CONNECTION METHOD**

(30) Priority: 28.12.2022 CN 202223551282 U; 17.05.2023 CN 202321202127 U
(71) Applicant: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: DIAO, Zhenbin, Foshan, Guangdong 528100 (CN); LIN, Xiyong, Foshan, Guangdong 528100 (CN); LI, Ximin, Foshan, Guangdong 528100 (CN); QIU, Banglong, Foshan, Guangdong 528100 (CN); HE, Wangzhi, Foshan, Guangdong 528100 (CN)
(74) Representative: Hautier IP - MC/EP
(86) International application number: PCT/CN2023/108174
(87) International publication number: WO 2024/139186

(57) **Abstract**

A welded quick connect fitting, comprising at least one connector assembly. The connector assembly comprises an inner pipe (130) and a housing assembly; the housing assembly comprises a pipe base (110) and a pipe sleeve (120); the pipe base is provided with a first stepped end (111), and the first stepped end is used for being connected to the pipe sleeve; the pipe sleeve is provided with a second stepped end (121); the first stepped end is provided with a first end surface (112), a third end surface (119), a first outer circular surface (113), and a second outer circular surface (114) lower than the first outer circular surface; the second stepped end is provided with a second end surface (122), a fourth end surface (128), a first inner circular surface (123), and a second inner circular surface (124) lower than the first inner circular surface; outer protrusions (116) are provided on the second outer circular surface, and the outer protrusions are pressed into the second inner circular surface; a gap exists between the first outer circular surface and the first inner circular surface to form a first overflow groove (126), and a gap exists between the second outer circular surface and the second inner circular surface to form a second overflow groove (127); the first outer circular surface and the second inner circular surface are welded in an interference fit area (129), and the first end surface and the second end surface abut against each other after welding. Provided is a piping system, comprising the welded quick connect fitting. Provided is a pipeline connection method, comprising using the welded quick connect fitting to connect pipes, and inserting the pipes between the inner pipe and the housing assembly. According to the welded quick connect fitting, the welding slag in the welding process can fall into the overflow grooves, thereby improving the welding quality and making the welding more convenient and attractive.

## Description

### CROSS-REFERENCE TO RELATED APPLICATIONS

This application claims priority to Chinese patent applications No. 202223551282.3, entitled "WELDED QUICK-CONNECT FITTING AND PIPING SYSTEM", filed with the Chinese Patent Office on December 28, 2022, and No. 202321202127.2, entitled "QUICK-CONNECT FITTING", filed with the Chinese Patent Office on May 17, 2023, the entire contents of which are incorporated by reference into this application.

### TECHNICAL FIELD

The present application relates to the field of quick-connect pipe fitting structures, and in particular to a welded quick-connect fitting, a piping system and a pipeline connection method.

### BACKGROUND

Existing pipe joints often use external seal straight-insert pipe fittings, clamp-type, flared sliding-tightening type, nut ferrule type, etc. These pipe fittings all have great disadvantages, such as: the external seal straight-insert pipe fittings cannot see the insertion of the pipe inside the pipe fittings during mounting, and it is easy to fall out or leak during use due to the failure of the pipe to be inserted in place; the clamp-type joints and flared sliding-tightening type require professional water workers to use special tools for mounting, which is highly professional and complicated to operate, it is easy to cause leakage at the connection due to improper operation, which is time-consuming, labor-intensive and costly; the nut ferrule type joints must be mounted by tightening the nuts with a wrench. This structure has requirements for the mounting space and requires a reserved wrench position. It is difficult to mount in small mounting spaces and corners. If the mounter does not tighten the nuts, the sealing performance of the pipe fittings cannot be guaranteed, and excessive torque can easily damage the internal parts. Moreover, after a period of use, the nuts are prone to loosening. If they are not re-tightened in time, the pipe fitting connection is prone to leakage. Moreover, when existing pipe fittings are welded, welding slag overflows, thus affecting the welding quality and appearance. Therefore, in the process of preparing welded parts, a process of removing welding slag needs to be added, which is cumbersome.

In addition, the sealing structure of pipe fitting joints generally uses O-rings for sealing. For example, in clamp-type structures, nut ferrule type structures, and ordinary straight-insert structures, O-rings are often used for sealing, but when this method is used for sealing, the pipe fitting joint needs to be filleted before mounting. The process is complicated, the mounting is cumbersome, time-consuming and labor-intensive, and the cost is high. In addition, the pipe cannot be cut obliquely, otherwise the sealing ring is easily squeezed or pushed out of the sealing groove when the pipe is inserted, making the sealing of the sealing ring invalid and the sealing effect poor; and if the mounter forgets to fillet the pipe port, the sealing performance cannot meet the use requirements, which will cause leakage of high-pressure fluid, thereby causing losses.

In view of this, this application is specially proposed.

### SUMMARY

The purpose of the present application is to provide a welded quick-connect fitting and a piping system, which can improve at least one defect of the existing pipe joint. The first overflow groove and the second overflow groove are arranged on both sides of the outer protrusion of the welding site, so that the welding slag in the welding process falls into the overflow groove, the welding quality is improved, and the welding is more convenient and beautiful.

The embodiment of the present application is achieved as follows.

In the first aspect, the present application provides a welded quick-connect fitting, which includes at least one joint assembly, and the joint assembly includes an inner tube and a shell assembly;

the shell assembly comprises a pipe seat and a pipe sleeve, two ends of the pipe seat are respectively provided with a first stepped end and an inner tube mounting end, one end of the pipe sleeve is provided with a second stepped end, the first stepped end is provided with a first end face, a third end face, a first outer circular surface and a second outer circular surface lower than the first outer circular surface, the first end face and the third end face are respectively provided at two ends of the first outer circular surface, the second stepped end is provided with a second end face, a fourth end face, a first inner circular surface and a second inner circular surface lower than the first inner circular surface, the second end face and the fourth end face are respectively provided with both ends of the first inner circular surface, an outer protrusion is provided on the second outer circular surface, the third end face is in contact with the fourth end face, the outer protrusion is pressed into the second inner circular surface, there is a gap between the first outer circular surface and the first inner circular surface and a first overflow groove is formed, there is a gap between the second outer circular surface and the second inner circular surface and a second overflow groove is formed, the first outer circular surface and the second inner circular surface are welded at the interference fit area, and the first end face and the second end face are in abutment after welding;

the shell assembly is inserted on the outside of the inner tube, a position of the inner tube away from an opening is snapped with the inner tube mounting end, and an inner wall of the shell assembly and an outer wall of the inner tube form a pipe inserting section for mounting the pipe.

In an optional embodiment, the material of the pipe seat is transparent plastic.

In an optional embodiment, a clamping ring is further provided in the pipe sleeve, the clamping ring is a ring-shaped structure with an opening, the clamping ring is provided with an outer conical surface and a clamping end face connected to each other, the clamping end face is provided with a clamping convex tooth, the inner wall of the clamping ring is provided with an inner inverted tooth, the pipe sleeve is provided with an inner conical surface, the diameter of the inner conical surface gradually decreases along a direction close to the opening of the inner tube, and the inner conical surface and the outer conical surface are fitted.

In an optional embodiment, the outer conical surface is also provided with a first groove for facilitating a removal of a sprue remnant.

In an optional embodiment, an elastic circlip is further provided in the pipe sleeve, and the elastic circlip comprises a mounting ring and a plurality of gripping teeth arranged around the mounting ring, one end of the gripping teeth is connected to an inner ring of the mounting ring, and the other end is inclined toward the direction away from the opening of the inner tube; the elastic circlip contacts the clamping end face.

In an optional embodiment, a slot is provided at a position of the inner tube away from the opening, and an inner protrusion is provided at the inner tube mounting end, and the inner protrusion is snapped into the slot.

In an optional embodiment, a sealing groove is provided on the inner tube, and a sealing ring is sleeved in the sealing groove, and the sealing ring is a chamfer-free sealing ring or an annular sealing ring.

In an optional embodiment, the joint assembly further comprises an elastic guide ring, the elastic guide ring is assembled in a position near the opening of the inner tube in the pipe inserting section, the elastic guide ring has a first guide ring end face and a second guide ring end face opposite to each other, the first guide ring end face is close to the opening of the inner tube, the second guide ring end face is connected to an inner circumferential surface of the elastic guide ring through a first arc transition surface, and is connected to an outer circumferential surface of the elastic guide ring through a second arc transition surface;
at least one the sealing groove is provided, each of the sealing grooves is provided with a sealing ring, an outer periphery of each sealing ring protrudes from the corresponding sealing groove, and the sealing ring is closer to the opening of the inner tube than the elastic guide ring.

In an optional embodiment, a plurality of uniformly distributed deformation grooves are provided at positions near the first guide ring end face on the outer circumferential surface of the elastic guide ring, and each of the deformation grooves penetrates the first guide ring end face;
a rib is provided in each of the deformation grooves, and each of the ribs has a connecting end and a free end, the connecting end is connected to a groove bottom of the deformation groove, the connecting end is provided at a position close to or connected to the outer circumferential surface of the elastic guide ring, and the free end extends obliquely in a direction away from an axis and extends to protrude from the outer circumferential surface of the elastic guide ring;
a circle of limiting groove is provided on an inner wall of the pipe sleeve near the opening of the inner tube, and the limiting groove has a movable inclined face and a stop end face which have relative positions, and the movable inclined face is further away from the opening of the inner tube than the stop end face;
after the elastic guide ring is assembled into the pipe inserting section, the free end is snapped into the limiting groove and abuts against the stop end face.

In an optional embodiment, a conical extrusion surface is further provided between the first arc transition surface and the inner circumferential surface of the elastic guide ring, an end face of the second guide ring is connected to the inner circumferential surface of the elastic guide ring through the first arc transition surface and the conical extrusion surface, and an inner diameter of the conical extrusion surface gradually decreases from a connection with the first arc transition surface to a connection with the inner conical surface.

In an optional embodiment, a distance from an outermost end of the outer protrusion to the axis is greater than a distance from the second inner circular surface to the axis, with an amount of 0.01mm~0.2mm; a distance from the first outer circular surface to the axis is less than a distance from the first inner circular surface to the axis, and greater than the distance from the second inner circular surface to the axis with an amount of 0.1mm~1.2mm.

In an optional embodiment, the number of joint assemblies is multiple, and the inner tubes of multiple joint assemblies are connected to form a straight-through, elbow, tee-junction or cross.

In an optional embodiment, the number of joint assembly is 1, and the inner tube of the joint assembly is a plug.

In the second aspect, the present application provides a welded quick-connect fitting, the welded quick-connect fitting comprises an inner tube body and at least one group of spigot mechanisms;
each group of spigot mechanisms comprises an elastic circlip, a jacket assembly, an elastic guide ring and at least one sealing ring;
the inner tube body has the same number of assembly sections as the spigot mechanisms, and the at least one group of spigot mechanisms is assembled on the assembly sections in the same number in a one-to-one correspondence;
the jacket assembly is sleeved on the corresponding assembly section, and an inner wall of the jacket assembly and an outer wall of the assembly section form a pipe inserting cavity, one end of the jacket assembly is connected to the assembly section, and the other end and an end of the assembly section form an pipe inserting inlet communicated to the pipe inserting cavity, and a direction from the pipe inserting inlet to the pipe inserting cavity is an insertion direction;
the elastic circlip has an annular mounting portion and a plurality of gripping teeth, and the plurality of gripping teeth are located on the same conical surface and connected to an inner circumference of the annular mounting portion; a circlip clamping position is provided in the pipe inserting cavity, the annular mounting portion is snapped in the circlip clamping position, and an extension direction of each gripping tooth is inclined to an axial direction and tends to the insertion direction;
the elastic guide ring is assembled in the pipe inserting cavity at a position close to the pipe inserting inlet, and the elastic guide ring has a first end face and a second end face relative to each other, the first end face is close to the pipe inserting inlet, the second end face is connected to an inner circumferential surface of the elastic guide ring through a first arc transition surface, and is connected to an outer circumferential surface of the elastic guide ring through a second arc transition surface; and
each of the assembly sections is provided with at least one sealing groove, and the at least one sealing ring is arranged in the sealing groove in a one-to-one correspondence, and is farther away from the pipe inserting inlet than the elastic guide ring, and an outer periphery surface of each sealing ring protrudes from the corresponding sealing groove.

In the third aspect, the present application provides a piping system, which includes a welded quick-connect fitting as any of the aforementioned embodiments.

In the fourth aspect, the present application provides a pipeline connection method, a pipe is connected using the welded quick-connect fitting of any of the aforementioned embodiments to connect the pipe, the pipeline connection method comprises:
inserting the pipe between the inner tube and the shell assembly.

The beneficial effects of the embodiments of the present application are as follows.

The welded quick-connect fittings provided by the present application are provided with a specific structure of the connection position of the pipe seat and the pipe sleeve, wherein the arrangements of the first stepped end and the second stepped end can not only realize the mounting and positioning of the pipe seat and the pipe sleeve, but also the inner protrusion of the pipe seat can increase the friction force of the pipe seat on the inner tube, so that it has a certain resistance and is not easy to shake and rotate to affect the use. Furthermore, the outer protrusion can play the role of welding positioning, and it is easy to control the welding size and improve the welding quality. The two sides of the outer protrusion are respectively the first overflow groove and the second overflow groove. When welding the area where the first outer circular surface and the second inner circular surface are interference fit, the generated welding slag can directly overflow into the first overflow groove and the second overflow groove, avoiding overflowing the outer surface of the welded part to affect the welding quality and appearance. After the first overflow groove and the second overflow groove are provided, the present application does not need to add a process for removing welding slag, which saves the process flow and makes welding more convenient. In addition, the present application also provides a piping system, which includes the above-mentioned welded quick-connect fittings.

### BRIEF DESCRIPTION OF DRAWINGS

In order to more clearly illustrate the technical solution of the embodiment of the present application, the following is a brief introduction to the drawings required for use in the embodiment. It should be understood that the following drawings only show some embodiments of the present application and should not be regarded as limiting the scope. For ordinary skilled in the art, other relevant drawings can also be obtained based on these drawings without creative work.
Figure 1 is a structural schematic diagram of a welded quick-connect fitting provided in the embodiment of the present application;
Figure 2 is a structural schematic diagram of a pipe seat of a welded quick-connect fitting provided in the embodiment of the present application at a first viewing angle;
Figure 3 is a structural schematic diagram of a pipe seat of a welded quick-connect fitting provided in the embodiment of the present application at a second viewing angle;
Figure 4 is a structural schematic diagram of a pipe sleeve of a welded quick-connect fitting provided in the embodiment of the present application at a first viewing angle;
Figure 5 is a sectional view of a pipe sleeve of a welded quick-connect fitting provided in the embodiment of the present application;
Figure 6 is a three-dimensional structural schematic diagram of an inner tube of a welded quick-connect fitting provided in the embodiment of the present application;
Figure 7 is a sectional view of an inner tube of a welded quick-connect fitting provided in the embodiment of the present application;
Figure 8 is a structural schematic diagram of the clamping ring of the welded quick-connect fitting provided in the embodiment of the present application at the first viewing angle;
Figure 9 is a structural schematic diagram of the clamping ring of the welded quick-connect fitting provided in the embodiment of the present application at the second viewing angle;
Figure 10 is a structural schematic diagram of the elastic circlip of the welded quick-connect fitting provided in the embodiment of the present application;
Figure 11 is a structural schematic diagram of the welded quick-connect fitting and the pipe provided in the embodiment of the present application at the beginning of mounting;
Figure 12 is a structural schematic diagram of the welded quick-connect fitting and the pipe provided in the embodiment of the present application at the completion of mounting;
Figure 13 is a structural schematic diagram of the welded quick-connect fitting provided in the embodiment of the present application;
Figure 14 is a structural schematic diagram of the welded quick-connect fitting and the pipe provided in the embodiment of the present application at the beginning of mounting;
Figure 15 is a structural schematic diagram of the welded quick-connect fitting and the pipe provided in the embodiment of the present application when the mounting is completed;
Figure 16 is an enlarged view of the area A in Figure 13;
Figure 17 is an enlarged view of the area C in Figure 14;
Figure 18 is a structural schematic diagram of the elastic guide ring in Figure 13 at a first viewing angle;
Figure 19 is a structural schematic diagram of the elastic guide ring in Figure 13 at a second viewing angle;
Figure 20 is a sectional view of the welded quick-connect fitting provided in the embodiment of the present application;
Figure 21 is a sectional view of the pipe just inserted into the welded quick-connect fitting from the pipe inserting inlet;
Figure 22 is a sectional view of the pipe just inserted into the welded quick-connect fitting;
Figure 23 is a structural schematic diagram of the elastic circlip in Figure 20;
Figure 24 is an enlarged view of area C in Figure 21;
Figure 25 is a structural schematic diagram of the inner tube body;
Figure 26 is a structural schematic diagram of an elastic guide ring at the first viewing angle;
Figure 27 is a structural schematic diagram of the elastic guide ring at the second viewing angle;
Figure 28 is a structural schematic diagram of the pipe seat at the first viewing angle;
Figure 29 is a structural schematic diagram of the pipe seat at the second viewing angle;
Figure 30 is a structural schematic diagram of the pipe sleeve at the first viewing angle;
Figure 31 is a structural schematic diagram of the pipe sleeve at the second viewing angle;
Figure 32 is an enlarged view of area B in Figure 2;
Figure 33 is a structural schematic diagram of the clamping ring at the first viewing angle;
Figure 34 is a structural schematic diagram of the clamping ring at the second viewing angle;
Figure 35 is an enlarged view of area A in Figure 1.

### Reference Signs:

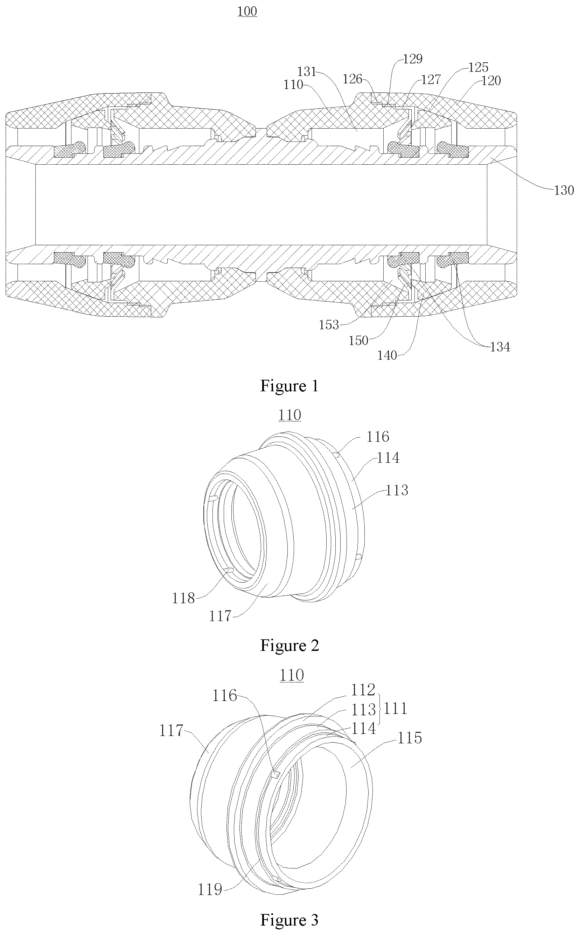

In Figures 1 to Figure 19, 100-welded quick-connect fitting; 110-pipe seat; 111-first stepped end; 112-first end face; 113-first outer circular surface; 114-second outer circular surface; 115-port inclined surface; 116-outer protrusion; 117-inner tube mounting end; 118-inner protrusion; 119-third end face; 120-pipe sleeve; 121-second stepped end; 122-second end face; 123-first inner circular surface; 124-second inner circular surface; 125-inner conical surface; 126-first overflow groove; 127-second overflow groove; 128-fourth end face; 129-interference fit area; 130-inner tube; 131-pipe inserting section; 132-slot; 133-sealing groove; 134-sealing ring; 140-clamping ring; 141-outer conical surface; 142-clamping end face; 143-clamping convex tooth; 144-inner inverted tooth; 145-first groove; 150-elastic circlip; 151-mounting ring; 152-gripping tooth; 153-deformation space; 161-limiting groove; 161a-movable inclined face; 161b-stop end face; 164-inlet inner circular surface; 180-elastic guide ring; 181-first guide ring end face; 182-deformation groove; 183-rib; 183a-connecting end; 183b-free end; 184-second guide ring end face; 185-first arc transition surface; 186-second arc transition surface; 187-conical extrusion surface; 200-pipe;

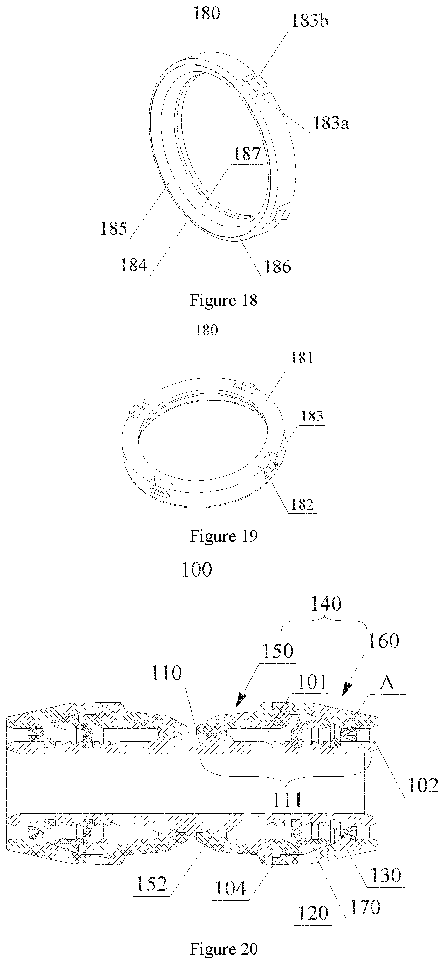

In Figure 20 to Figure 35, 100-welded quick-connect fitting; 101-pipe inserting cavity; 102-pipe inserting inlet; 104-deformation space; 110-inner tube body; 111-assembly section; 112-sealing groove; 113-first convex ring; 114-second convex ring; 115-connection slot; 120-elastic circlip; 121-annular mounting portion; 122-gripping tooth; 130-sealing ring; 140-jacket assembly; 150-pipe seat; 151-first connecting end; 152-inner circular convex ring; 154-second connecting end; 155-first outer circular surface; 156-second outer circular surface; 156a-outer protrusion; 157-pipe seat conical surface; 158-limiting convex ring; 159-limiting surface; 160-pipe sleeve; 161-limiting groove; 161a-movable inclined face; 161b-stop end face; 162-first abutting face; 163-second abutting face; 164-inlet inner circular surface; 165-first inner circular surface; 166-second inner circular surface; 167-conical surface inner wall; 168-third connecting end; 169-inlet end; 170-clamping ring; 171-opening; 172-conical surface outer wall; 173-glue inlet groove; 174-inner inverted tooth; 175-end face convex tooth; 180-elastic guide ring; 181-first end face; 182-deformation groove; 183-rib; 183a-connecting end; 183b-free end; 184-second end face; 185-first arc transition surface; 186-second arc transition surface; 187-conical extrusion surface; 11-pipe.

### DETAILED DESCRIPTION OF EMBODIMENTS

In order to make the purpose, technical solution and advantages of the embodiment of the present application clearer, the technical solution in the embodiment of the present application will be clearly and completely described below in conjunction with the drawings in the embodiment of the present application. Obviously, the described embodiment is a part of the embodiments of the present application, not all of the embodiments. The components of the embodiment of the present application generally described and shown in the drawings here can be arranged and designed in various different configurations.

Therefore, the following detailed description of the embodiment of the present application provided in the drawings is not intended to limit the scope of protection claimed by the application, but only represents the selected embodiment of the present application. Based on the embodiments in the present application, all other embodiments obtained by ordinary skilled in the art without creative work are within the scope of protection of the present application.

It should be noted that similar numbers and letters represent similar items in the following drawings, so once an item is defined in one drawing, it does not need to be further defined and explained in subsequent drawings.

In the description of this application, it should be noted that the terms "center", "up", "down", "left", "right", "vertical", "horizontal", "inside", "outside" and the like indicate the orientation or position relationship based on the orientation or position relationship shown in the attached drawings, or the orientation or position relationship in which the product of the application is usually placed when in use, which is only for the convenience of describing this application and simplifying the description, and does not indicate or imply that the device or element referred to must have a specific orientation, be constructed and operated in a specific orientation, and therefore cannot be understood as a limitation on this application. In addition, the terms "first", "second", "third" and the like are only used to distinguish the description, and cannot be understood as indicating or implying relative importance.

In addition, the terms "horizontal" and "vertical" do not mean that the components are required to be absolutely horizontal or suspended, but can be slightly tilted. For example, "horizontal" only means that its direction is more horizontal than "vertical", and does not mean that the structure must be completely horizontal, but can be slightly tilted.

In the description of this application, it should also be noted that, unless otherwise clearly specified and limited, the terms "provide", "mount", "connect", and "attach" should be understood in a broad sense, for example, it can be a fixed connection, a detachable connection, or an integral connection; it can be a mechanical connection or an electrical connection; it can be directly connected, or indirectly connected through an intermediate medium, or it can be the internal connection of two components. For ordinary skilled in the art, the specific meanings of the above terms in this application can be understood according to specific circumstances.

Please refer to Figure 1. One embodiment of the present application provides a welded quick-connect fitting 100, which includes at least one joint assembly, and the joint assembly includes an inner tube 130 and a shell assembly. The welded quick-connect fitting 100 can be a pipe fitting with a plug, a straight-through, an elbow, a tee-junction, a cross, or more end numbers. That is, when there is one joint assembly, the inner tube 130 is a plug. When there are the plurality of joint assemblies, the plurality of inner tubes 130 are connected to form a straight-through, an elbow, a tee-junction, or a cross.

In this application, a straight-through welded quick-connect fitting 100 is taken as an example, which includes at least one joint assembly. The joint assembly includes an inner tube 130, a pipe sleeve 120 and a pipe seat 110. One end of the pipe seat 110 is connected to the inner tube 130, and the other end is connected to the pipe sleeve 120. The pipe sleeve 120 and the pipe seat 110 are connected to form a shell assembly, which is sleeved on the outer side of the inner tube 130. The inner wall of the shell assembly and the outer wall of the inner tube 130 form a pipe inserting section 131 for mounting the pipe.

Please refer to Figure 2 and Figure 3. The pipe seat 110 is in the shape of a tube with a reduced diameter at one end. The two ends of the pipe seat 110 are respectively provided with a first stepped end 111 and an inner tube mounting end 117. The first stepped end 111 is used to connect with the pipe sleeve 120, and the inner tube mounting end 117 is used to connect with the inner tube 130. Specifically, the first stepped end 111 is provided with a first end face 112, a third end face 119, a first outer circular surface 113 and a second outer circular surface 114 lower than the first outer circular surface 113. The first end face 112 and the third end face 119 are respectively provided at the two ends of the first outer circular surface 113. The bottom port of the second outer circular surface 114 is provided with a port inclined surface 115. The port inclined surface 115 is used to form a deformation space 153 with the gripping teeth 152 of the elastic circlip 150 mentioned later in a free state to accommodate the gripping teeth 152 when mounting the spigot. The inner tube mounting end 117 is provided with an inner protrusion 118, and the inner protrusion 118 is stuck in the outer wall of the inner tube 130. The inner protrusion 118 of the pipe seat 110 can increase the friction force of the pipe seat 110 on the inner tube 130, so that it has a certain resistance and is not easy to shake and rotate to affect the use. The pipe seat 110 is made of transparent engineering injection plastic that can be ultrasonically welded or friction welded. The transparent material can facilitate observation of the internal mounting of the spigot.

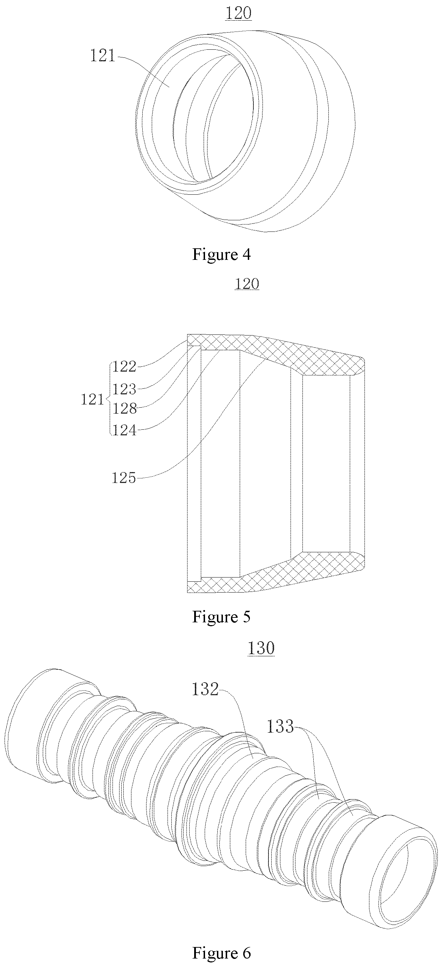

Please refer to Figure 4 and Figure 5. The pipe sleeve 120 is a trumpet-shaped tube. One end of the pipe sleeve 120 is provided with a second stepped end 121. The second stepped end 121 is provided with a second end face 122, a fourth end face 128, a first inner circular surface 123 and a second inner circular surface 124 lower than the first inner circular surface 123. The second end face 122 and the fourth end face 128 are respectively provided at both ends of the first inner circular surface 123.

Optionally, when the pipe sleeve 120 is not assembled or connected with the pipe seat 110, the distance from the outermost end of the outer protrusion 116 to the axis is greater than the distance from the second inner circular surface 124 to the axis, with an amount of 0.01mm~0.2mm (for example, 0.01mm, 0.02mm, 0.03mm, 0.05mm, 0.08mm, 0.1mm, 0.15mm and 0.2mm) (that is, the distance from the outermost end of the outer protrusion 116 to the axis is slightly greater than the distance from the second inner circular surface 124 to the axis). The distance from the first outer circular surface 113 to the axis is less than the distance from the first inner circular surface 123 to the axis, and greater than the distance from the second inner circular surface 124 to the axis with an amount of 0.1mm~1.2mm (for example, 0.1mm, 0.2mm, 0.3mm, 0.5mm, 0.8mm, 1mm, 1.1mm and 1.2mm) (that is, the distance from the first outer circular surface 113 to the axis is slightly greater than the distance from the first inner circular surface 123 to the axis).

Please refer to Figure 1 to Figure 5. The connection way between the pipe seat 110 and the pipe sleeve 120 is welding. Specifically, before welding, the third end face 119 and the fourth end face 128 are first abutted against each other. An outer protrusion 116 is provided on the second outer circular surface 114. The outer diameter of the outer protrusion 116 is slightly larger than the outer diameter of the second inner circular surface 124, so that the outer protrusion 116 is pressed into the second inner circular surface 124, which is beneficial for the pipe seat 110 to be inserted into the pipe sleeve 120 during welding assembly to increase friction, and the accessories are not easy to fall out. The pre-matching of the third end face 119, the fourth end face 128, and the outer protrusion 116 can achieve better positioning and welding. At this time, there is a gap between the first outer circular surface 113 and the first inner circular surface 123 and a first overflow groove 126 is formed. There is a gap between the second outer circular surface 114 and the second inner circular surface 124 and a second overflow groove 127 is formed. The first outer circular surface 113 and the second inner circular surface 124 are welded. In the present application, the outer protrusion 116 can play a role in welding positioning, and it is easy to control the welding size and improve the welding quality. The two sides of the outer protrusion 116 are respectively the first overflow groove 126 and the second overflow groove 127. The area of the first outer circular surface 113 close to the second outer circular surface 114 and the area of the second inner circular surface 124 close to the first inner circular surface 123 are interference fit. When welding the interference fit area 129, the generated welding slag can directly overflow into the first overflow groove 126 and the second overflow groove 127, avoiding overflowing the outer surface of the welded part to affect the welding quality and appearance. After the first overflow groove 126 and the second overflow groove 127 are provided, the present application does not need to add a process for removing welding slag, which saves the process flow and makes welding more convenient. After the external equipment completes the welding of the first outer circular surface 113 and the second inner circular surface 124, the first end face 112 and the second end face 122 are in contact, realizing the termination indication for welding.

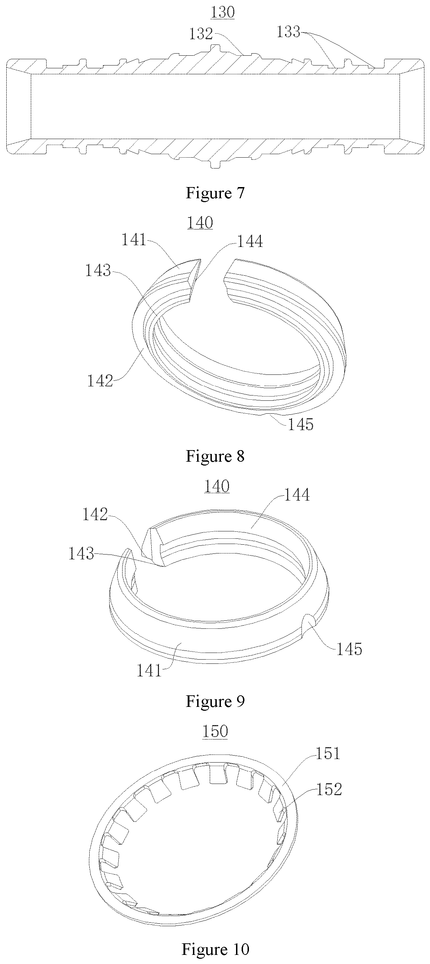

Please refer to Figure 6 and Figure 7. Figure 6 shows a structure formed by connecting two straight-through inner tubes 130. In the figure, the two inner tubes 130 are connected at one end away from the opening. The inner tube 130 is a tubular structure, and the inner tube 130 is connected to one end of the pipe seat 110. Specifically, the inner tube 130 is connected with the inner tube mounting end 117 at a position away from the opening in a snap-fit manner. A slot 132 is provided on the outer wall of the inner tube 130 away from the opening, and an inner protrusion 118 is provided at the inner tube mounting end 117. The inner protrusion 118 is inserted into the slot 132 to prevent it from slipping out. A sealing groove 133 is provided on the inner tube 130, and a sealing ring 134 is provided inside the sealing groove 133. The inner tube 130 can be made of metal or high-strength engineering plastics.

In this application, the welded quick-connect fitting 100 is also provided with a clamping ring 140 and an elastic circlip 150.

Please refer to Figure 8 and Figure 9, wherein the clamping ring 140 is an annular structure with an opening, the clamping ring 140 is provided with an outer conical surface 141 and a clamping end face 142 connected to each other. The clamping end face 142 is provided with a clamping convex tooth 143, and the inner wall of the clamping ring 140 is provided with an inner inverted tooth 144. The pipe sleeve 120 is provided with an inner conical surface 125, and the diameter of the inner conical surface 125 gradually decreases along the direction close to the opening of the inner tube 130. The inclination angle of the inner conical surface 125 is consistent with the inclination angle of the outer conical surface 141 of the clamping ring 140, and the inner conical surface 125 and the outer conical surface 141 are fitted. The inclination angle of the inner conical surface 125 with the axis is between 5 degrees and 40 degrees. When in use, the inner conical surface 125 can make the clamping ring 140 that fits it produce radial contraction while axially moving toward the end of the pipe 200, so that the inner inverted teeth 144 of the clamping ring 140 can better grasp the outer wall of the pipe to prevent the pipe from falling out. The outer conical surface 141 is also provided with a first groove 145 for conveniently removing the sprue remnant. The injection molding inlet is arranged on the first groove 145. The first groove 145 is arranged to facilitate the removal of the sprue remnant to prevent the residual water nozzle from being too high after production and affecting the assembly and use of the product. The pipe sleeve 120 is made of engineering injection plastic that can be ultrasonically welded or friction welded, which has the same material type and properties as the pipe seat 110, and is convenient for welding and manufacturing.

Please refer to Figure 10. The elastic circlip 150 is annular. The elastic circlip 150 includes a mounting ring 151 and a plurality of gripping teeth 152 arranged around the mounting ring 151. One end of the gripping teeth 152 is connected to the inner ring of the mounting ring 151, and the other end is inclined toward the opening away from the inner tube 130. The elastic circlip 150 is axially placed between the port inclined surface 115 of the pipe seat 110 and the clamping ring 140. The elastic circlip 150 contacts the clamping end face 142. The gripping teeth 152 of the elastic circlip 150 gradually decrease away from the port of the pipe 200. The inner diameter of the tooth top of the gripping teeth 152 in the free state is slightly smaller than the outer diameter of the pipe, so that after the spigot is mounted, the gripping teeth 152 have a clamping force on the outer wall of the pipe to prevent the pipe from falling out. The elastic circlip 150 is made of high-strength, high-rigidity, and high-elasticity metal sheet material.

When in use, the pipe 200 whose inner diameter is the same as or slightly larger than the outer diameter of the inner tube 130 and whose thickness matches the pipe inserting section 131 from the opening of the inner tube is inserted into the pipe inserting section 131. When the pipe 200 is inserted, it will push the gripping teeth 122 to deform. Since the insertion direction is consistent with the extension direction of the gripping teeth 152, the gripping teeth 152 will not produce obvious resistance to the insertion of the pipe 200. After the pipe 200 is inserted, the gripping teeth 152 are in a state of pressing against the outer wall of the pipe 200. At this time, if you want to pull out the pipe 200 with external force, the outward friction force generated by the outer wall of the pipe 200 on the gripping teeth 152 will make the gripping teeth 152 have a tendency to restore the deformation, and this tendency will further cause the gripping teeth 152 to press against the pipe 200, so that the pipe 200 can be effectively locked.

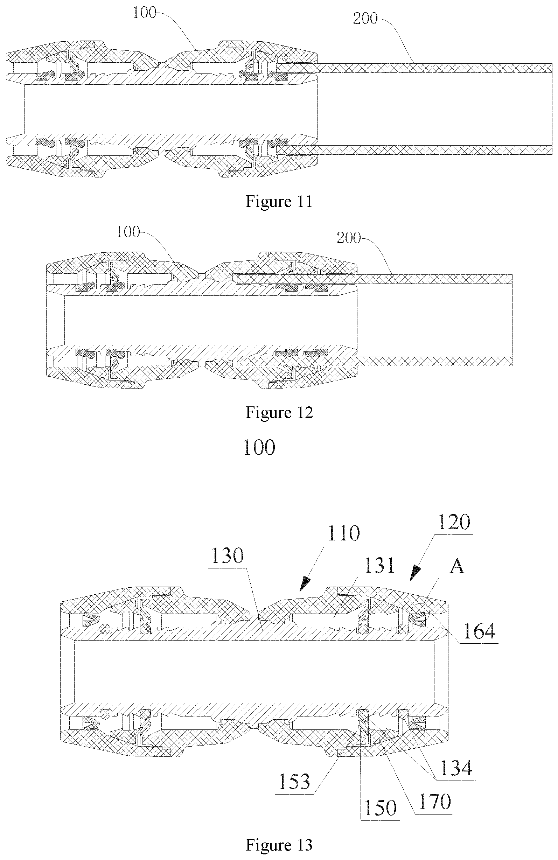

Please refer to Figures 13, 18 and 19. In one embodiment of the present application, the joint assembly further includes an elastic guide ring 180. The elastic guide ring 180 is assembled in the position near the opening of the inner tube 130 in the pipe inserting section 131. The elastic guide ring 180 has a first guide ring end face 181 and a second guide ring end face 184 opposite to each other. The first guide ring end face 181 is close to the opening of the inner tube 130. The second guide ring end face 184 is connected to the inner circumferential surface of the elastic guide ring 180 through the first arc transition surface 185, and is connected to the outer circumferential surface of the elastic guide ring 180 through the second arc transition surface 186.

Please refer to Figure 13. At least one sealing grooves 133 is provided. Each sealing groove 133 is provided with a sealing ring 134. The outer periphery of each sealing ring 134 protrudes from the corresponding sealing groove 133. The sealing ring 134 is closer to the opening of the inner tube 130 than the elastic guide ring 180.

Please refer to Figures 13-15. The welded quick-connect fitting 100 provided in this embodiment, after the pipe 200 is inserted into the pipe inserting section 131 from the opening of the inner tube, first abuts against the first guide ring end face 181 of the elastic guide ring 180. As the insertion continues, the elastic guide ring 180 is pushed inward. When it moves to the sealing ring 134, due to the arrangement of the two arc transition surfaces of the elastic guide ring 180, the pushing effect on the outer periphery of the sealing ring 134 is small, and the elastic guide ring 180 slides into the inner hole of the pipe 200 more smoothly, reducing the friction resistance to the sealing ring 134 and the outer circular surface of the inner tube. When the pipe 200 without chamfering the end face is inserted, the elastic guide ring 180 is pushed forward. Under the guidance of the elastic guide ring 180, the sealing ring 134 will not be squeezed out. Therefore, this arrangement can realize the mounting of the pipe 11 without chamfering the opening, and the mounting process is smoother.

Therefore, the quick pipe fitting provided in this embodiment is simple to use and easy to mount, and has a good locking effect after mounting. It is not necessary to chamfer the pipe 11 during mounting, and the sealing ring 134 will not be squeezed out during the mounting process.

Optionally, please refer to Figures 18 and 19. A conical extrusion surface 187 is further provided between the first arc transition surface 185 and the inner circumferential surface of the elastic guide ring 180. The second guide ring end face 184 is connected to the inner circumferential surface of the elastic guide ring 180 through the first arc transition surface 185 and the conical extrusion surface 187. The inner diameter of the conical extrusion surface 187 gradually decreases from the connection with the first arc transition surface 185 to the connection with the inner conical surface.

After the first arc transition surface 185 passes through the sealing ring 134, the conical extrusion surface 187 can gradually squeeze the sealing ring 134 from the top during the movement. The arrangement of the conical extrusion surface 187 enables the elastic guide ring 180 to be pressed into the sealing groove 112 during the movement, which can further ensure that the elastic guide ring 180 is more smoothly inserted into the pipe inserting section 131.

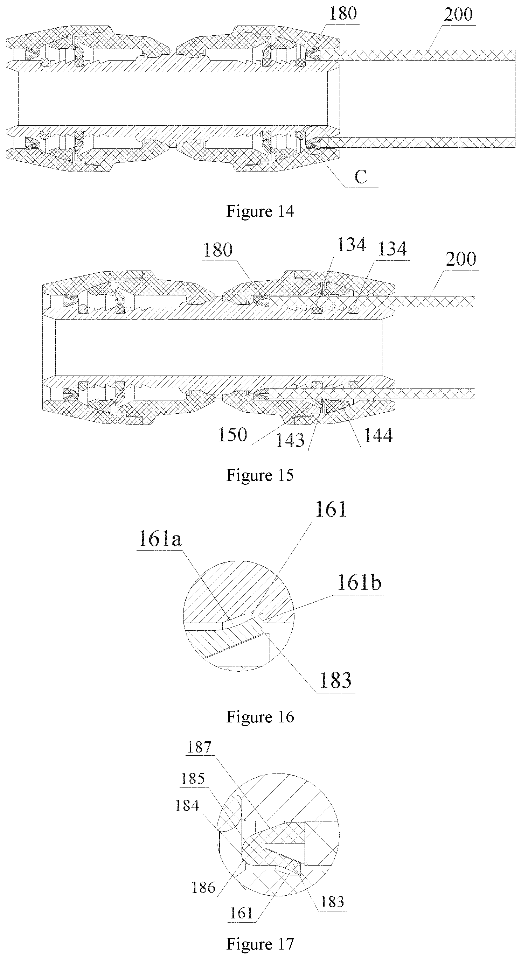

Please refer to Figures 16-19. When the elastic guide ring 180 is mounted in the pipe inserting section 131, its first guide ring end face 181 is close to the opening of the inner tube 130. Optionally, a plurality of uniformly distributed deformation grooves 182 are provided on the outer circumferential surface of the elastic guide ring 180 near the first guide ring end face 181. Each deformation groove 182 penetrates the first guide ring end face 181. A rib 183 is provided in each deformation groove 182, and each rib 183 has a connecting end 183a and a free end 183b. The connecting end 183a is connected to the groove bottom of the deformation groove 182, and the connecting end 183a is arranged at a position close to or connected to the outer circumferential surface of the elastic guide ring 180. The free end 183b extends obliquely in a direction away from an axis and extends to the outer circumferential surface of the protruding elastic guide ring 180. The inner wall of the pipe sleeve 120 is provided with a circle of limiting groove 161 at the opening close to the inner tube 130. The limiting groove 161 has a movable inclined face 161a and a stop end face 161b which have relative positions. The movable inclined face 161a is farther away from the opening of the inner tube 130 than the stop end face 161b. The distance from the outermost end of the rib 183 to the axis is equivalent to the distance from the groove bottom of the limiting groove 161 to the axis. After the elastic guide ring 180 is assembled into the pipe inserting section 131, the free end 183b is snapped into the limiting groove 161 and abuts against the stop end face 161b.

During assembly, the top of the rib 183 is snapped into the limiting groove 161. Due to the arrangement of the stop end face 161b, the elastic guide ring 180 can be effectively prevented from falling out during the transportation of the welded quick-connect fitting 100. During the assembly process, as the elastic guide ring 180 moves, the movable inclined face 161a and the outer side of the rib 183 away from the deformation groove 182 are attached and push the rib 183 of the elastic guide ring 180 to elastically deform, and the radial size of the top of the rib 183 gradually decreases, which can reduce the friction resistance of the guide ring to the pipe sleeve 120, making it easier to mount the spigot. Therefore, the above-mentioned rib 183 and the limiting groove 161 can realize the limiting of the elastic guide member before the pipe 11 is inserted, and can also ensure that the elastic limiting member can smoothly move out of the limiting groove 161 from the movable inclined face 161a after the pipe 200 is inserted.

Optionally, the pipe sleeve 120 has an inlet inner circular surface 164, the inlet inner circular surface 164 is the inner circular surface of one end of the pipe sleeve 120 away from the pipe seat 110. The inner diameter of the pipe sleeve 120 at the inlet inner circular surface 164 is slightly larger than the outer diameter of the pipe 200, and smaller than the inner diameter at the second inner circular surface 124. The inlet inner circular surface 164 and the second inner circular surface 124 are connected by an inner conical surface 125. The limiting groove 161 is arranged on the inlet inner circular surface 164.

Optionally, the end of the rib 183 does not exceed the first guide ring end face 181, and the axial dimension difference between the rib 183 and the first guide ring end face 181 is ≥0.2mm. The end of the rib 183 is not flush with the first guide ring end face 181, so that the rib 183 has a certain elastic deformation space when the spigot is mounted, reducing the spigot resistance. The diameter of the top of the rib 183 is slightly larger than the inner diameter of the pipe sleeve 120 at the inlet inner circular surface 164. After assembly, the top of the rib 183 can be snapped into the limiting groove 61 of the pipe sleeve 120 to prevent the guide ring from falling out. When mounting the spigot, the rib 183 elastically deforms and slides out of the limiting groove 161.

In the above embodiment of the present application, the assembly of the welded quick-connect fitting 100 and the welding process of the shell assembly are as follows.
1. The clamping ring 140 is axially placed in the pipe sleeve 120, and the placement direction is that the outer conical surface 141 of the clamping ring 140 fits the inner conical surface 125 of the sleeve 120.
2. The elastic circlip 150 is axially placed in the pipe sleeve 120, and the placement direction is that the gripping teeth 152 of the elastic circlip 150 protrude away from the inlet end of the spigot of the pipe sleeve 120.
3. The pipe seat 110 is placed axially into the pipe sleeve 120 and press it in with a light force so that the outer protrusion 116 of the pipe seat 110 is snapped into the second inner circular surface 124 of the pipe sleeve 120. At this time, the third end face 119 of the pipe seat 110 and the fourth end face 128 of the pipe sleeve 120 are in abutment. Since the diameter of the outer protrusion 116 of the pipe seat 110 is slightly larger than the diameter of the second inner circular surface 124 of the pipe sleeve 120, the fitting is not easy to fall out with the interference fit.
4. The assembled shell assembly is placed into the welding mold to complete the welding. At this time, there is a gap between the first outer circular surface 113 and the first inner circular surface 123 and a first overflow groove 126 is formed, and there is a gap between the second outer circular surface 114 and the second inner circular surface 124 and a second overflow groove 127 is formed. The welding slag generated by welding overflows into the first overflow groove 126 and the second overflow groove 127. During welding, the welding area of the pipe seat 110 and the pipe sleeve 120 will generate local high temperature to quickly fuse the two accessories together. Since welding technology is used, the pipe seat 110 and the pipe sleeve 120 are preferably made of the same engineering plastic, or engineering plastics with similar softening temperatures and capable of being fused.
5. The sealing ring 134 is sleeved on the sealing groove 133 of the inner tube 130.
6. A press machine is used to axially press the welded shell assembly onto the inner tube 130, so that the inner protrusion 118 of the pipe seat 110 is snapped into the slot 132 of the inner tube 130. The snapping direction is that the inner protrusion 118 of the pipe seat 110 is away from the port of the inner tube 130.

The mounting process of the welded quick-connect fittings of the above embodiment is as follows.

Please refer to Figure 11 and Figure 12.

When using, the pipe is inserted axially from the port of the pipe 200, and the end face of the pipe passes through the inner holes of the pipe sleeve 120 and the clamping ring 140 in turn, and then the gripping teeth 152 of the elastic circlip 150 is pushed to open. The gripping teeth 152 are elastically deformed with a certain pre-tightening force to hold the outer circle of the pipe, and then a slight force is applied to push the port of the pipe to the bottom of the inner wall cavity of the pipe seat 110. At this time, the internal spigot situation can be seen through the transparent pipe seat 110, and the mounting and use are safe and reliable.

When the medium pressure or external force inside the pipe 200 causes the pipe to come out in the direction the port of the pipe 200, the gripping teeth 152 of the elastic circlip 150 and the inner inverted teeth 144 on the inner wall of the clamping ring 140 will prevent the pipe from falling out. At the same time, the elastic circlip 150 causes the clamping ring 140 to axially displace toward the port of the pipe 200. Since the clamping ring 140 with an opening fits the inner conical surface 125 of the pipe sleeve 120, the clamping ring 140 also contracts radially while displacing axially, and then the inner inverted teeth 144 on the inner wall of the clamping ring 140 also contract radially to hold the outer circle of the pipe more tightly, the friction force of the inner inverted teeth 144 on the outer circle of the pipe is increased, and the pipe is prevented from falling out.

When the pipe is pulled out by a greater pulling force, the gripping teeth 152 of the elastic circlip 150 will contact and squeeze the end face convex teeth at the end of the clamping ring 140, which will increase the stiffness of the gripping teeth 152 of the elastic circlip 150, and also make the inner inverted teeth 144 of the clamping ring 140 more tightly wrap the outer circle of the pipe to increase the friction force and prevent the pipe from falling out.

In summary, the welded quick-connect fitting 100 provided in the above embodiment of the present application is provided with a specific structure of the connection position of the pipe seat 110 and the pipe sleeve 120, wherein the arrangements of the first stepped end 111 and the second stepped end 121 can not only realize the mounting and positioning of the pipe seat 110 and the pipe sleeve 120, but the inner protrusion 118 of the pipe seat 110 can also increase the friction force of the pipe seat 110 on the inner tube 130, so that it has a certain resistance but is not easy to shake and rotate to affect the use. Furthermore, the outer protrusion 116 can play a role in welding positioning, and it is easy to control the welding size and improve the welding quality. The two sides of the outer protrusion 116 are the first overflow groove 126 and the second overflow groove 127 respectively. When the interference fit area of the first outer circular surface 113 and the second inner circular surface 124 is welded, the generated welding slag can directly overflow into the first overflow groove 126 and the second overflow groove 127 to avoid overflowing the outer surface of the welded part to affect the welding quality and appearance. After arranging the first overflow groove 126 and the second overflow groove 127, the present application does not need to add a process for removing welding slag, which saves the process flow and makes welding more convenient. In the present application, the pipe seat 110 is made of transparent engineering injection molding material. The transparent material can facilitate the observation of the internal mounting of the spigot, realize visual mounting, simple operation, time-saving and labor-saving, and more economical mounting cost, which is green and environmentally friendly.

Please refer to Figure 20 to Figure 35.

Please refer to Figures 20 to Figure 22, an embodiment of the present application provides a welded quick-connect fitting 100, including an inner tube body 110 and at least one group of spigot mechanisms.

Each group of spigot mechanisms includes an elastic circlip 120, a jacket assembly 140 and at least one sealing ring 103.

The inner tube body 110 has the same number of assembly sections 111 as the spigot mechanisms, and at least one group of spigot mechanisms is assembled on the same number of assembly sections 111.

The jacket assembly 140 is sleeved on the corresponding assembly section 111, and the inner wall of the jacket assembly 140 and the outer wall of the assembly section 111 form a pipe inserting cavity 101. One end of the jacket assembly 140 is connected to the assembly section 111, and the other end and the end of the assembly section 111 form a pipe inserting inlet 102 communicated to the pipe inserting cavity 101, and the direction from the pipe inserting inlet 102 to the pipe inserting cavity 101 is the insertion direction.

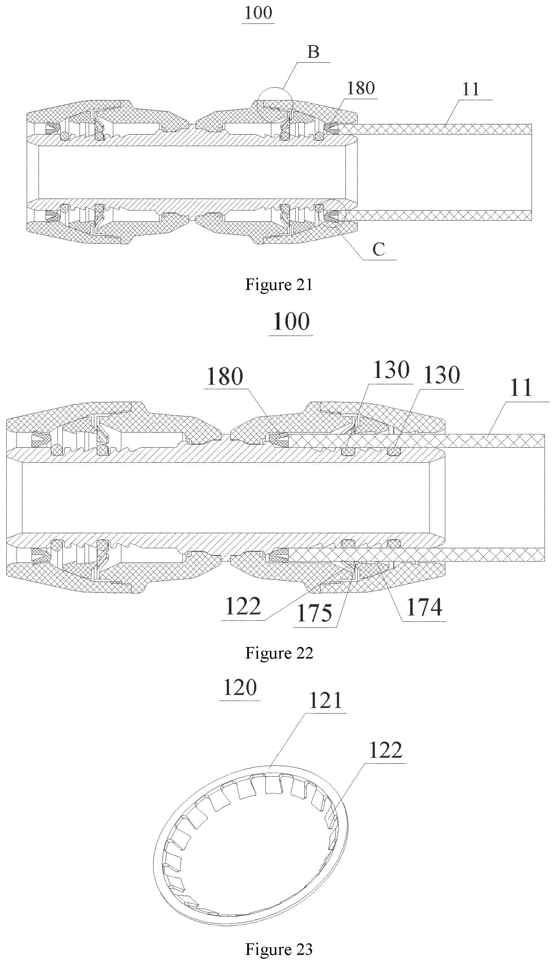

Please refer to Figure 23, the elastic circlip 120 has an annular mounting portion 121 and a plurality of gripping teeth 122, and the plurality of gripping teeth 122 are located on the same conical surface and connected to the inner circumferential surface of the annular mounting portion 121. A circlip clamping position is provided in the pipe inserting cavity 101, and the annular mounting portion 121 is clamped in the circlip clamping position. The extension direction of each gripping tooth 122 is inclined to the axial direction and tends to the insertion direction.

Please refer to Figure 20, Figure 21, and Figure 24. The elastic guide ring 180 is assembled in the pipe inserting cavity 101 at a position close to the pipe inserting inlet 102. The elastic guide ring 180 has a first end face 181 and a second end face 184 opposite to each other. The second end face 184 is connected to the inner circumferential surface of the elastic guide ring 180 through a first arc transition surface 185, and is connected to the outer circumferential surface of the elastic guide ring 180 through a second arc transition surface 186.

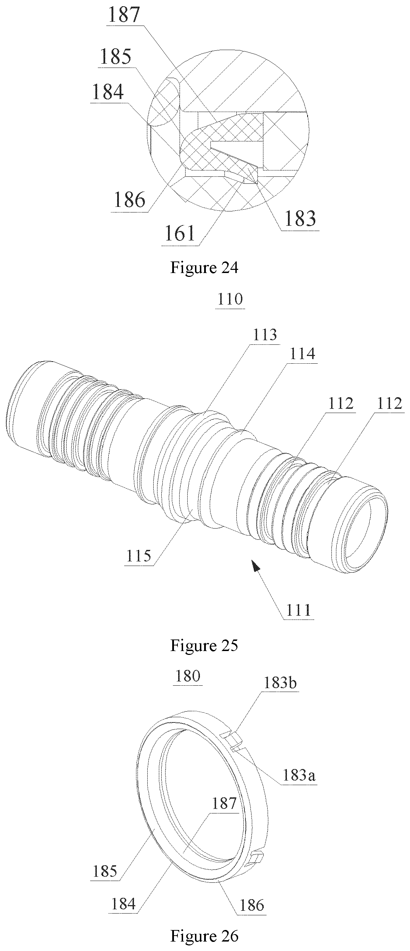

Please refer to Figure 20 and Figure 25. Each assembly section 111 is provided with at least one sealing groove 112, and at least one sealing ring 103 is arranged in the sealing groove 112 in a one-to-one correspondence, and is farther away from the pipe inserting inlet 102 than the elastic guide ring 180. The outer periphery of each sealing ring 103 protrudes from the corresponding sealing groove 112.

Please refer to Figure 21 to Figure 22. When in use, the welded quick-connect fitting 100 of this embodiment of the present application inserts the pipe 11 with an inner diameter the same as or slightly larger than the assembly section 111 and a thickness matching the pipe inserting cavity 101 along the insertion direction from the pipe inserting inlet 102 into the pipe inserting cavity 101. When the pipe 11 is inserted, the pipe 11 will push the gripping teeth 122 to deform. Since the insertion direction and the extension direction of the gripping teeth 122 tend to be consistent, the gripping teeth 122 will not produce obvious resistance to the insertion of the pipe 11. After the pipe 11 is inserted, the gripping teeth 122 are in a state of pressing against the outer wall of the pipe 11. At this time, if the pipe 11 is to be pulled out by external force, the outward friction force generated by the outer wall of the pipe 11 on the gripping teeth 122 will cause the gripping teeth 122 to tend to recover the deformation, and this tendency will further cause the gripping teeth 122 to press against the pipe 11, thus effectively achieving the locking of the pipe 11. The pipe 11 is abutted against the first end face 181 of the elastic guide ring 180 after being inserted. As the insertion continues, the elastic guide ring 180 is pushed inward. When the elastic guide ring moves to the sealing ring 103, due to the arrangements of the two arc transition surfaces of the elastic guide ring 180, the pushing effect on the outer periphery of the sealing ring 103 is small, and the elastic guide ring 180 slides into the inner hole of the pipe 11 more smoothly, the friction resistance on the outer surface of the pipe sealing ring 103 and the inner tube assembly section 111 is reduced. When the pipe 11 without chamfering on the end face is inserted, the elastic guide ring 180 is pushed forward. Under the guidance of the elastic guide ring 180, the sealing ring 103 will not be squeezed out. Therefore, this arrangement can realize the mounting of the opening of the pipe 11 without chamfering, and the mounting process is smoother.

Therefore, the quick pipe fitting provided by this embodiment is simple to use and easy to mount, and has a good locking effect after mounting. It is not necessary to chamfer the pipe 11 during mounting, and the sealing ring 103 will not be squeezed out during the mounting process.

Optionally, in actual production, it can be made into a plug or a plurality of end caps as required, for example, the inner tube body 110 is a straight-through, elbow, tee-junction or cross.

Refer to Figure 24, Figure 26 and Figure 27. Further, a conical extrusion surface 187 is provided between the first arc transition surface 185 and the inner circumferential surface of the elastic guide ring 180. The second end face 184 is connected to the inner circumferential surface of the elastic guide ring 180 through the first arc transition surface 185 and the conical extrusion surface 187. The inner diameter of the conical extrusion surface 187 gradually decreases from the connection with the first arc transition surface 185 to the connection with the inner conical surface.

After the first arc transition surface 185 passes through the sealing ring 103, the conical extrusion surface 187 can gradually squeeze the sealing ring 103 from the top during the movement. The arrangement of the conical extrusion surface 187 enables the elastic guide ring 180 to be pressed into the sealing groove 112 during the movement, which can further ensure that the elastic guide ring 180 is more smoothly inserted into the pipe inserting cavity.

Please refer to Figure 20 to Figure 22. Further, the jacket assembly 140 includes a pipe seat 150, a pipe sleeve 160 and a clamping ring 170. The inner wall of the pipe seat 150, the inner wall of the pipe sleeve 160, the inner wall of the clamping ring 170 and the outer wall of the assembly section 111 together form the pipe inserting cavity 101.

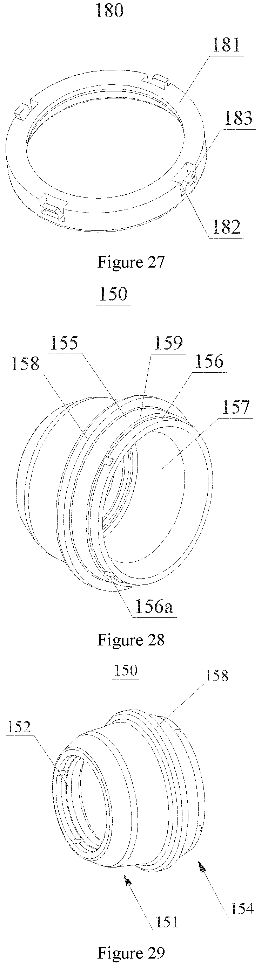

As shown in Figure 28 to Figure 31, the pipe seat 150 has a first connecting end 151 and a second connecting end 154 which are opposite to each other. The pipe sleeve has a third connecting end 168 and an inlet end 169 which are opposite to each other. The first connecting end 151 is connected to the assembly section 111, the second connecting end 154 is connected to the third connecting end 168, and the inlet end 169 and the end of the assembly section 111 form the pipe inserting inlet 102.

Specifically, the outer diameter of the assembly section 111 of the inner tube body 110 is slightly smaller than the inner diameter of the pipe 11, and is used to mount the spigot. Please refer to Figure 1 and Figure 6, two sealing grooves 112 are arranged on the outer wall of the assembly section 111 for sleeving the sealing rings 103. Further, one sealing groove 112 is arranged near pipe inserting inlet 102, and the other is arranged at the position equipped with the corresponding elastic circlip 120. Please refer to Figures 1, 6, and 10. The end of the assembly section 111 away from the pipe inserting inlet 102 is also provided with a connection slot 115, the connection slot 115 is formed by a first convex ring 113 and a second convex ring 114. The inner wall of the first connection end 151 is provided with an inner circular convex ring 152. After assembly, the inner circular convex ring 152 of the pipe seat 150 is snapped into the connection slot 115 to achieve the connection between the pipe seat 150 and the pipe sleeve 160, which can prevent the pipe seat 150 from falling out.

Please refer to Figure 27 and Figure 29. A limiting convex ring 158 is provided on the outer wall of the pipe seat 150. The outer diameter of the limiting convex ring 158 is consistent with the outer diameter of the end face of the third connecting end 168 of the pipe sleeve 160. The end of the limiting convex ring 158 close to the pipe inserting inlet 102 is the second connecting end 154. The outer wall of the second connecting end 154 is provided with a first outer circular surface 155 and a second outer circular surface 156 extending to the endmost face. The outer diameter of the second connecting end 154 at the first outer circular surface 155 is greater than the outer diameter at the second outer circular surface 156. The first outer circular surface 155 is arranged adjacent to the limiting convex ring 158. The outer diameter of the limiting convex ring 158 is greater than the diameter of the pipe seat 150 at the first outer circular surface 155. The stepped surface formed at the junction of the first outer circular surface 155 and the second outer circular surface 156 is the limiting surface 159.

Please refer to Figure 28, Figure 30 and Figure 32. The inner wall of the third connection end 168 is provided with a first inner circular surface 165 and a second inner circular surface 166 extending to the endmost face. The inner diameter of the third connection end 168 at the first inner circular surface 165 is smaller than the inner diameter at the second inner circular surface 166. A plurality of outer protrusions 156a are provided on the second outer circular surface 156. The endmost face of the third connection end 168 is named the first abutting face 162, and the stepped surface at the junction of the first inner circular surface 165 and the second inner circular surface 166 is named the second abutting face 163.

When the pipe sleeve 160 is not assembled or connected with the pipe seat 150, the distance from the outermost end of the outer protrusion 156a to the axis is greater than the distance from the first inner circular surface to the axis, and larger amount is 0.01mm-0.2mm (for example, 0.01mm, 0.02mm, 0.03mm, 0.05mm, 0.08mm, 0.1mm, 0.15mm and 0.2mm) (that is, the distance from the outermost end of the outer protrusion 156a to the axis is slightly greater than the distance from the first inner circular surface 165 to the axis). The distance from the first outer circular surface 155 to the axis is smaller than the distance from the second inner circular surface 166 to the axis, and is larger than the distance from the first inner circular surface 165 to the axis, and the larger amount is 0.1mm~1.2mm (for example, 0.1mm, 0.2mm, 0.3mm, 0.5mm, 0.8mm, 1mm, 1.1mm and 1.2mm) (i.e., the distance from the first outer circular surface 155 to the axis is slightly larger than the distance from the first inner circular surface 165 to the axis).

The pipe sleeve 160 is elastic, and the above arrangement can realize that when the pipe sleeve 160 is assembled and connected with the pipe seat 150, the first outer circular surface 165 can be first snapped on the plurality of outer protrusions 156a, and pre-assembled by interference fit, at which time the second abutting face 163 abuts against the limiting surface 159. Then the preassembled parts are placed in the welding equipment, the first inner circular surface 165 and the first outer circular surface 155 are the welding area, and the welding area is heated by ultrasound. In this process, the pipe sleeve 160 is pushed to continue to move axially in the direction close to the pipe seat 150 until the first abutting face 162 abuts against the side of the limiting convex ring 158, so that the first inner circular surface 165 can be snapped outside the first outer circular surface 155 to achieve further assembly through interference fit. Alternatively, the preassembled parts are placed in the welding equipment, and the pipe sleeve 160 is pushed to continue to move axially in the direction close to the pipe seat 150, and the welding area is heated by friction until the first abutting face 162 abuts against the side of the limiting convex ring 158, so that the first inner circular surface 165 can be snapped outside the first outer circular surface 155 to achieve further assembly through interference fit.

Optionally, please refer to Figure 20 and Figure 23. The inner wall of the second connection end 154 has a conical surface of the pipe seat 150 whose inner diameter gradually increases in the direction away from the first connection end 151. The conical surface of the pipe seat 150 and the conical surface where the plurality of gripping teeth 122 are located form a deformation space 104. The deformation space 104 provides a movable space for the plurality of gripping teeth 122 after deformation when the pipe 11 is inserted.

The pipe seat 150 is made of a transparent engineering injection plastic that can be ultrasonically welded or friction welded. The transparent material can facilitate observation of the internal mounting of the spigot. The pipe sleeve 160 is made of an engineering injection plastic that can be ultrasonically welded or friction welded, which has the same material type and properties as the pipe seat 150, and is convenient for welding.

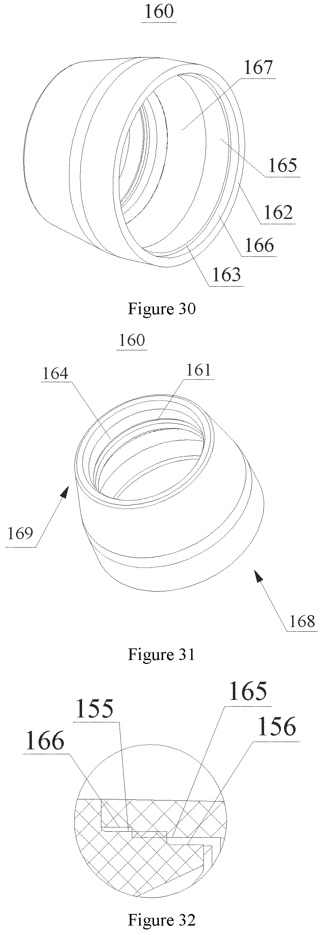

Please refer to Figure 31, Figure 33 and Figure 34. The inlet end 169 of the pipe sleeve 160 has an inlet inner circular surface 164. The inner diameter of the pipe sleeve 160 at the inlet inner circular surface 164 is slightly larger than the outer diameter of the pipe 11 and smaller than the inner diameter at the first inner circular surface 165. The inlet inner circular surface 164 and the first inner circular surface 165 are connected by a conical surface inner wall 167. The clamping ring 170 is an open ring, which has a conical surface outer wall 172. The clamping ring 170 is located inside the pipe sleeve 160. The conical surface outer wall 172 fits the conical surface inner wall 167. The outer diameter of the clamping ring 170 corresponding to the conical surface outer wall 172 gradually increases along the insertion direction. The inner wall of the clamping ring 170 has a circle of inner inverted teeth 174. The tooth tip extension direction of the inner inverted teeth 174 is inclined to the axial direction and tends to the insertion direction.

The angle of inclination of the conical surface outer wall 172 and the conical surface inner wall 167 is between 5 and 40 degrees. When in use, the conical surface inner wall 167 can cause the clamping ring 170 fitted thereto to produce radial contraction while the pipe fitting moves axially toward the pipe inserting inlet 102, so that the inner inverted teeth 174 of the clamping ring 170 can better grasp the outer wall of the pipe 11 to prevent the pipe 11 from slipping out.

Optionally, an end face convex tooth 175 is provided at one end of the clamping ring 170 close to the second connecting end 154, and the extension direction of the end face convex tooth 175 is inclined to the axial direction and tends to the insertion direction, and the tooth end of the end face convex tooth 175 extends to approach or contact the plurality of gripping teeth 122.

When the tube 11 is subjected to a greater pulling force and has a tendency to come out, the gripping teeth 122 of the elastic circlip 120 will contact and squeeze the end face convex teeth 175 at the end of the clamping ring 170, which will increase the rigidity of the gripping teeth 122 of the elastic circlip 120, and also make the sharp teeth of the clamping ring 170 more tightly wrap the outer circle of the tube 11 to increase the friction force and prevent the tube 11 from falling out.

Optionally, the outer wall of the clamping ring 170 is provided with a glue inlet groove 173 parallel to the axial direction, and the glue inlet groove 173 passes through the end face of the clamping ring 170 close to the second connecting end 154. The glue inlet for production injection molding is arranged on the glue inlet groove 173. The glue inlet groove 173 is arranged to facilitate the removal of the sprue remnant, so as to prevent the excessively high sprue remnant after production from affecting the assembly and use of the product.

The space between the end face of the clamping ring 170 with the end face concave teeth and the end face of the second connection end 154 of the pipe seat 150 is the circlip clamping position, and the annular mounting portion 121 of the elastic circlip 120 is arranged here.

Optionally, the space between the end face of the clamping ring 170 with the end face concave teeth and the end face of the second connection end 154 of the pipe seat 150 is the circlip clamping position, and the annular mounting portion 121 of the elastic circlip 120 is arranged here. The gripping teeth 122 of the elastic circlip 120 gradually decrease in the direction away from the pipe inserting inlet 102, and the distance from the tooth top of the gripping teeth 122 to the axis in the free state is slightly smaller than the outer diameter of the pipe 11, so that after the spigot is mounted, the gripping teeth 122 have a clamping force on the outer wall of the pipe 11 to prevent the pipe 11 from falling out. The elastic circlip 120 is made of high-strength, high-rigidity and high-elastic metal sheet material.

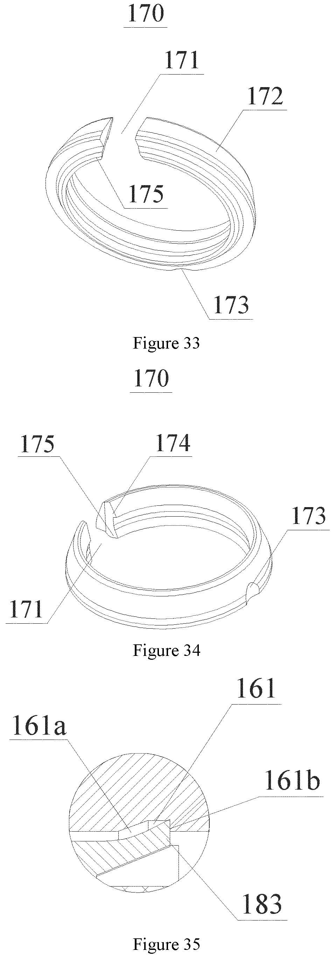

Please refer to Figure 35. Further, the first end face 181 of the elastic guide ring 180 is close to the pipe inserting inlet 102. The outer circumferential surface of the elastic guide ring 180 is provided with a plurality of uniformly distributed deformation grooves 182 near the first end face 181. Each deformation groove 182 penetrates the first end face 181. On the elastic guide ring 180, each deformation groove 182 is provided with a rib 183. Each rib 183 has a connecting end 183a and a free end 183b. The connecting end 183a is connected to groove bottom of the deformation groove 182. The connecting end 183a is arranged close to or connected to the outer circumferential surface of the elastic guide ring 180, and the free end 183b extends obliquely away from the axis to the outer circumferential surface of the protruding elastic guide ring 180. The inner wall of the pipe sleeve 160 is provided with a circle of limiting groove 161 near the pipe inserting inlet 102, and the limiting groove 161 has a inclined surface 161a and a stop end face 161b which are relatively movable, and the movable inclined face 161a is farther away from the pipe inserting inlet 102 than the stop end face 161b.

The distance from the end of the rib 183 to the axis is equivalent to the distance from the bottom of the limiting groove 161 to the axis. After the elastic guide ring 180 is assembled into the pipe inserting cavity 101, the free end 183b is snapped into the limiting groove 161 and abuts against the stop end face 161b.

During assembly, the top of the rib 183 is snapped into the limiting groove 161. The arrangement of the stop end face 161b can effectively prevent the elastic guide ring 180 from falling out during the transportation of the welded quick-connect fitting 100. During the assembly process, as the elastic guide ring 180 moves, the movable inclined face 161a and the outer side of the rib 183 away from the deformation groove 182 are fitted and push the rib 183 of the elastic guide ring 180 to elastically deform it. The radial size of the top of the rib 183 gradually decreases, which can reduce the friction resistance of the guide ring to the pipe sleeve 160, making it easier to mount the spigot. Therefore, the arrangement of the rib 183 and the limiting groove 161 can realize the limiting of the elastic guide member before the pipe 11 is inserted, and can also ensure that the elastic limiting member can smoothly move out of the limiting groove 161 from the movable inclined face 161a after the pipe 11 is inserted.

Optionally, the end of the rib 183 does not extend beyond the first end face 181, and the axial dimension difference between the rib 183 and the first end face 181 is ≥0.2mm. The end of the rib 183 is not flush with the first end face 181, so that the rib 183 has a certain elastic deformation space 104 when the spigot is mounted, reducing the spigot resistance. The diameter of the top of the rib 183 is slightly larger than the inner diameter of the pipe sleeve 160 at the inlet inner circular surface 164. After assembly, the top of the rib 183 can be snapped into the limiting groove 161 of the pipe sleeve 160 to prevent the guide ring from falling out. When mounting the spigot, the rib 183 elastically deforms and slides out of the limiting groove 161.

Optionally, the elastic guide ring 180 is injection molded with engineering plastics with certain toughness and bright colors. The bright color makes it easy for users to observe the position of the internal elastic guide ring 180 through the pipe seat 150.

The mounting method of the welded quick-connect fitting 100 provided in the above embodiment is as follows.
1. The clamping ring 170 is placed axially into the pipe sleeve 160, and the placement direction is the conical surface outer wall 172 of the clamping ring 170 and the conical surface inner wall 167 of the pipe sleeve 160.
2. The elastic circlip 120 is placed axially into the pipe sleeve 160, and the placement direction is the protruding direction of the gripping teeth 122 of the elastic circlip 120 away from the port direction of the inner tube body 110.
3. The pipe seat 150 is placed axially into the pipe sleeve 160 and press it in with a relatively light force so that the outer protrusion 156a of the pipe seat 150 is snapped into the second outer circular surface 156 of the pipe sleeve 160. At this time, the second abutting face 163 abuts against the limiting surface 159, achieving an interference fit, and the accessories are not easy to fall out.
4. The above-assembled shell assembly is placed into the welding mold to complete the welding. At this time, the first abutting face 162 abuts against the side of the limiting convex ring 158. During welding, the welding area of the pipe seat 150 and the pipe sleeve 160 will generate local high temperature to quickly fuse the two accessories together. Due to the welding process, the pipe seat 150 and the pipe sleeve 160 are preferably made of the same engineering plastic, or engineering plastics with similar softening temperatures and can be fused together.
5. The sealing ring 103 is sleeved on the inner tube sealing groove 112.
6. A press machine is used to axially press the above-mentioned welded assemblies onto the inner tube, so that the inner circular convex ring 152 of the pipe seat 150 is snapped into the inner tube clamping groove. The snapping direction is the direction in which the inner circular convex ring 152 of the pipe seat 150 is away from the port of the inner tube body 110.
7. The elastic guide ring 180 is sleeved axially into the inner tube body 110, and an assembly tool is used to snap the rib 183 of the elastic guide ring 180 into the limiting groove 161 of the pipe sleeve 160. The snapping direction is the direction in which the first end face 181 of the elastic guide ring 180 is close to the port of the inner tube body 110.

The use and mounting process of the welded quick-connect fitting 100 provided in the above embodiment is as follows.
1. When in use, the port of the pipe 11 is inserted axially from the pipe inserting inlet 102, and the elastic guide ring 180 is pushed to the bottom of the pipe inserting cavity 101. When the elastic guide ring 180 moves axially toward the bottom of the pipe inserting cavity 101, the rib 183 of the elastic guide ring 180 abuts the movable inclined face 161a of the pipe sleeve 160, and the rib 183 is thus elastically deformed. When the elastic guide ring 180 passes through the sealing ring 103, the conical extrusion surface 187 and the inner circumferential surface of the elastic guide ring 180 first abut the surface of the sealing ring 103 and compress the outer diameter of the sealing ring 103, and then introduce it into the inner hole of the pipe 11.

The end face of the pipe 11 passes through the first inner circular surface 165 of the pipe sleeve 160 in turn and pushes against the first end face 181 of the elastic guide ring 180 to pass through the inner hole of the clamping ring 170, and then the inverted gripping teeth 122 of the elastic circlip 120 is pushed to open. The gripping teeth 122 are elastically deformed with a certain pre-tightening force to hold the outer circle of the pipe 11, and then a slight force is applied to push the elastic guide ring 180 to the bottom of the inner wall cavity of the pipe seat 150. At this time, the internal insertion of the pipe can be seen through the transparent pipe seat 150, and the mounting and use are safe and reliable. Because the elastic guide ring 180 first guides the extrusion of the sealing ring 103, it is easier to mount the spigot without the chamfering of the inner corner of the pipe 11.
2. When the medium pressure or external force inside the pipe fitting causes the pipe 11 to fall out in the direction of the pipe fitting port, the gripping teeth 122 of the elastic circlip 120 and the inner inverted teeth 174 on the inner wall of the clamping ring 170 will prevent the pipe 11 from falling out. At the same time, the elastic circlip 120 causes the clamping ring 170 to axially displace toward the port of the pipe fitting. Since the clamping ring 170 with the opening 171 fits the inner conical surface of the pipe sleeve 160, the clamping ring 170 also contracts radially while displacing axially, so that the inner inverted teeth 174 on the inner wall of the clamping ring 170 also contract radially to hold the outer circle of the pipe 11 more tightly, increase the friction force of the sharp teeth on the outer circle of the pipe 11, and prevent the pipe 11 from falling out.
3. When the pipe 11 is pulled out by a greater pulling force, the gripping teeth 122 of the elastic circlip 120 will contact and squeeze the end face convex teeth 175 at the end of the clamping ring 170, which will increase the stiffness of the gripping teeth 122 of the elastic circlip 120, and also make the sharp teeth of the clamping ring 170 more tightly wrap the outer circle of the pipe 11 to increase the friction force and prevent the pipe 11 from falling out.

The entire mounting process does not require professionals and special mounting tools, visual mounting, simple operation, time-saving and labor-saving, more cost-saving mounting, and green environmental protection. It is easier to achieve fully automated production, and the cost is low to improve product competitiveness.

In addition, the present application also provides a piping system, which includes the above-mentioned welded quick-connect fittings 100. Since the piping system includes the welded quick-connect fittings 100 provided by the present application, it is easy to mount.

In addition, the present application also provides a pipeline connection method, which uses welded quick-connect fittings to connect pipes. The pipeline connection method includes: inserting the pipe between the inner tube and the shell assembly. The pipeline connection method has the characteristics of high connection efficiency because the welded quick-connect fittings provided by the present application are used to connect the pipes.

The above description is only a preferred embodiment of the present application and is not intended to limit the present application. For those skilled in this art, the present application may have various changes and variations. Any modifications, equivalent replacements, improvements, etc. made within the spirit and principles of the present application should be included in the scope of protection of the present application.

### INDUSTRIAL APPLICABILITY

The welded quick-connect fitting provided by the present application can not only realize the mounting and positioning of the pipe seat and the pipe sleeve, but also the inner protrusion of the pipe seat can increase the friction force between the pipe seat and the inner tube, so that it has a certain resistance and is not easy to shake and rotate to affect the use. When the pipe seat and the pipe sleeve are welded, the generated welding slag can directly overflow into the first overflow groove and the second overflow groove, avoiding overflowing the outer surface of the welded part to affect the welding quality and appearance. After the first overflow groove and the second overflow groove are provided, the present application does not need to add a process for removing welding slag, which saves the process flow and makes welding more convenient.

## Claims

1. A welded quick-connect fitting, **characterized in that** the welded quick-connect fitting comprises at least one joint assembly, wherein the joint assembly comprises an inner tube and a shell assembly;
the shell assembly comprises a pipe seat and a pipe sleeve, two ends of the pipe seat are respectively provided with a first stepped end and an inner tube mounting end, one end of the pipe sleeve is provided with a second stepped end, the first stepped end is provided with a first end face, a third end face, a first outer circular surface and a second outer circular surface lower than the first outer circular surface, the first end face and the third end face are respectively provided at two ends of the first outer circular surface, the second stepped end is provided with a second end face, a fourth end face, a first inner circular surface and a second inner circular surface lower than the first inner circular surface, the second end face and the fourth end face are respectively provided with both ends of the first inner circular surface, an outer protrusion is provided on the second outer circular surface, the third end face is in contact with the fourth end face, the outer protrusion is pressed into the second inner circular surface, a gap exists between the first outer circular surface and the first inner circular surface and a first overflow groove is formed, a gap exists between the second outer circular surface and the second inner circular surface and a second overflow groove is formed, the first outer circular surface and the second inner circular surface are welded at an interference fit area, and the first end face and the second end face are in abutment after welding; and
the shell assembly is inserted on an outside of the inner tube, a position of the inner tube away from an opening is snapped with the inner tube mounting end, and an inner wall of the shell assembly and an outer wall of the inner tube form a pipe inserting section for mounting a pipe.

2. The welded quick-connect fitting according to claim 1, wherein a material of the pipe seat is transparent plastic.

3. The welded quick-connect fitting according to claim 1 or 2, wherein a clamping ring is further provided in the pipe sleeve, the clamping ring is a ring-shaped structure with an opening, the clamping ring is provided with an outer conical surface and a clamping end face connected to each other, the clamping end face is provided with a clamping convex tooth, an inner wall of the clamping ring is provided with an inner inverted tooth, the pipe sleeve is provided with an inner conical surface, a diameter of the inner conical surface gradually decreases along a direction close to the opening of the inner tube, and the inner conical surface and the outer conical surface are fitted.

4. The welded quick-connect fitting according to claim 3, wherein the outer conical surface is further provided with a first groove for facilitating a removal of a sprue remnant.

5. The welded quick-connect fitting according to claim 4, wherein an elastic circlip is further provided in the pipe sleeve, and the elastic circlip comprises a mounting ring and a plurality of gripping teeth arranged around the mounting ring, one end of the gripping teeth is connected to an inner ring of the mounting ring, and the other end is inclined toward a direction away from the opening of the inner tube; and the elastic circlip contacts the clamping end face.

6. The welded quick-connect fitting according to any one of claims 1 to 5, wherein a slot is provided at a position of the inner tube away from the opening, and an inner protrusion is provided at the inner tube mounting end, and the inner protrusion is snapped into the slot.

7. The welded quick-connect fitting according to any one of claims 1 to 6, wherein a sealing groove is provided on the inner tube, and a sealing ring is sleeved in the sealing groove, and the sealing ring is a chamfer-free sealing ring or an annular sealing ring.

8. The welded quick-connect fitting according to claim 7, wherein the joint assembly further comprises an elastic guide ring, the elastic guide ring is assembled in a position near the opening of the inner tube in the pipe inserting section, the elastic guide ring has a first guide ring end face and a second guide ring end face opposite to each other, the first guide ring end face is close to the opening of the inner tube, the second guide ring end face is connected to an inner circumferential surface of the elastic guide ring through a first arc transition surface, and is connected to an outer circumferential surface of the elastic guide ring through a second arc transition surface; and
at least one sealing groove is provided, each of the sealing grooves is provided with a sealing ring, an outer periphery of each sealing ring protrudes from the corresponding sealing groove, and the sealing ring is closer to the opening of the inner tube than the elastic guide ring.

9. The welded quick-connect fitting according to claim 8, wherein a plurality of uniformly distributed deformation grooves are provided at positions near the first guide ring end face on an outer circumferential surface of the elastic guide ring, and each of the deformation grooves penetrates the first guide ring end face;
a rib is provided in each of the deformation grooves, and each of the ribs has a connecting end and a free end, the connecting end is connected to a groove bottom of the deformation groove, the connecting end is provided at a position close to or connected to the outer circumferential surface of the elastic guide ring, and the free end extends obliquely in a direction away from an axis and extends to protrude from the outer circumferential surface of the elastic guide ring;
a circle of limiting groove is provided on an inner wall of the pipe sleeve near the opening of the inner tube, and the limiting groove has a movable inclined face and a stop end face which have relative positions, and the movable inclined face is further away from the opening of the inner tube than the stop end face; and
after the elastic guide ring is assembled into the pipe inserting section, the free end is snapped into the limiting groove and abuts against the stop end face.

10. The welded quick-connect fitting according to claim 8, wherein a conical extrusion surface is further provided between the first arc transition surface and an inner circumferential surface of the elastic guide ring, an end face of the second guide ring is connected to the inner circumferential surface of the elastic guide ring through the first arc transition surface and the conical extrusion surface, and an inner diameter of the conical extrusion surface gradually decreases from a connection with the first arc transition surface to a connection with the inner conical surface.

11. The welded quick-connect fitting according to any one of claims 1 to 10, wherein a distance from an outermost end of the outer protrusion to an axis is greater than a distance from the second inner circular surface to the axis, with an amount of 0.01mm~0.2mm; a distance from the first outer circular surface to the axis is less than a distance from the first inner circular surface to the axis, and greater than a distance from the second inner circular surface to the axis with an amount of 0.1mm~1.2mm.

12. The welded quick-connect fitting according to any one of claims 1 to 10, wherein a number of the joint assemblies is multiple, and the inner tubes of the multiple joint assemblies are connected to form a straight-through, elbow, tee-junction or cross;
or the number of the joint assembly is 1, and the inner tube of the joint assembly is a plug.

13. A welded quick-connect fitting, **characterized in that** the welded quick-connect fitting comprises an inner tube body and at least one group of spigot mechanisms;
each group of spigot mechanisms comprises an elastic circlip, a jacket assembly, an elastic guide ring and at least one sealing ring;
the inner tube body has the same number of assembly sections as the spigot mechanisms, and the at least one group of spigot mechanisms is assembled on the assembly sections in the same number in a one-to-one correspondence;
the jacket assembly is sleeved on the corresponding assembly section, and an inner wall of the jacket assembly and an outer wall of the assembly section form a pipe inserting cavity, one end of the jacket assembly is connected to the assembly section, and the other end and an end of the assembly section form an pipe inserting inlet communicated to the pipe inserting cavity, and a direction from the pipe inserting inlet to the pipe inserting cavity is an insertion direction;
the elastic circlip has an annular mounting portion and a plurality of gripping teeth, and the plurality of gripping teeth are located on the same conical surface and connected to an inner circumference of the annular mounting portion; a circlip clamping position is provided in the pipe inserting cavity, the annular mounting portion is snapped in the circlip clamping position, and an extension direction of each gripping tooth is inclined to an axial direction and tends to the insertion direction;
the elastic guide ring is assembled in the pipe inserting cavity at a position close to the pipe inserting inlet, and the elastic guide ring has a first end face and a second end face relative to each other, the first end face is close to the pipe inserting inlet, the second end face is connected to an inner circumferential surface of the elastic guide ring through a first arc transition surface, and is connected to an outer circumferential surface of the elastic guide ring through a second arc transition surface; and
each of the assembly sections is provided with at least one sealing groove, and the at least one sealing ring is arranged in the sealing groove in a one-to-one correspondence, and is farther away from the pipe inserting inlet than the elastic guide ring, and an outer periphery of each sealing ring protrudes from the corresponding sealing groove.

14. The welded quick-connect fitting according to claim 13, wherein the jacket assembly comprises a pipe seat, a pipe sleeve and a clamping ring, and an inner wall of the pipe seat, an inner wall of the pipe sleeve, an inner wall of the clamping ring and the outer wall of the assembly section together form the pipe inserting cavity;
the pipe seat has a first connecting end and a second connecting end relative to each other, and the pipe sleeve has a third connecting end and an inlet end relative to each other, the first connecting end is connected to the assembly section, the second connecting end is connected to the third connecting end, and the inlet end and an end of the assembly section form the pipe inserting inlet;
the clamping ring is an open ring, which has a conical surface outer wall, and the pipe sleeve has a conical surface inner wall, the clamping ring is located inside the pipe sleeve, and the conical surface outer wall fits the conical surface inner wall, and an outer diameter of the clamping ring corresponding to the conical surface outer wall gradually increases along the insertion direction;
an inner wall of the clamping ring has a circle of inner inverted teeth, and a tooth tip of the inner inverted teeth extends in a direction that is inclined to an axial direction and tends to the insertion direction; and
the second connecting end extends into the third connecting end, and the annular mounting portion is snapped between the second connecting end and the clamping ring.

15. The welded quick-connect fitting according to claim 14, wherein an end face convex tooth is provided at one end of the clamping ring close to the second connecting end, and the end face convex tooth extends in a direction that is inclined to the axial direction and tends to the insertion direction, and a tooth end of the end face convex tooth extends to approach or contact the plurality of gripping teeth.

16. The welded quick-connect fitting according to claim 14, wherein an inner wall of the first connection end is provided with an inner circular convex ring, and an outer wall of the assembly section away from the pipe inserting inlet is provided with a connection slot, and during assembly, the inner circular convex ring is snapped in the connection slot to achieve a connection between the pipe seat and the inner tube body.

17. The welded quick-connect fitting according to claim 14, wherein an inner wall of the second connection end has a pipe seat conical surface with an inner diameter gradually increasing in a direction away from the first connection end, and the pipe seat conical surface and a conical surface where the plurality of gripping teeth are located form a deformation space, and the deformation space is configured to provide a movable space for the plurality of gripping teeth after deformation when a pipe is inserted.

18. The welded quick-connect fitting according to claim 14, wherein an outer wall of the second connection end is provided with a first outer circular surface and a second outer circular surface extending to an endmost face, and an outer diameter of the second connection end at the first outer circular surface is larger than an outer diameter at the second outer circular surface;
an inner wall of the third connection end is provided with a first inner circular surface and a second inner circular surface extending to an endmost face, and an inner diameter of the third connection end at the first inner circular surface is smaller than an inner diameter at the second inner circular surface;
a plurality of outer protrusions are provided on the second outer circular surface;
when the pipe sleeve is not assembled or connected with the pipe seat, a distance from an outermost end of the outer protrusion to an axis is greater than a distance from the first inner circular surface to the axis, with an amount of 0.01mm~0.2mm; a distance from the first outer circular surface to the axis is less than a distance from the second inner circular surface to the axis, and greater than a distance from the first inner circular surface to the axis with an amount of 0.1mm~1.2mm; and
the pipe sleeve is elastic so that when the pipe sleeve is assembled and connected with the pipe seat, the first inner circular surface is able to be snapped outside a plurality of outer protrusions with an interference fit for pre-assembly, and after an external force is further applied and the first inner circular surface and the first outer circular surface are welded, the first inner circular surface is able to be snapped outside the first outer circular surface with the interference fit for assembly.

19. The welded quick-connect fitting according to claim 14, wherein a plurality of uniformly distributed deformation grooves are provided on the outer circumferential surface of the elastic guide ring near the first end face, and each deformation groove penetrates the first end face;
a rib is provided in each deformation groove, and each rib has a connecting end and a free end, and the connecting end is connected to a groove bottom of the deformation groove, and the connecting end is provided at a position close to or connected to the outer circumferential surface of the elastic guide ring, and the free end extends obliquely in a direction away from an axis and extends to protrude from the outer circumferential surface of the elastic guide ring;
a circle of limiting groove is provided on the inner wall of the pipe sleeve near the pipe inserting inlet, and the limiting groove has a movable inclined face and a stop end face which have relative positions, and the movable inclined face is further away from the pipe inserting inlet than the stop end face; and
after the elastic guide ring is assembled into the pipe inserting cavity, the free end is snapped into the limiting groove and abuts against the stop end face.

20. The welded quick-connect fitting according to claim 14, wherein an outer wall of the clamping ring is provided with a glue inlet groove parallel to an axial direction, and the glue inlet groove penetrates an end face of the clamping ring close to the second connection end.

21. The welded quick-connect fitting according to claim 14, wherein the pipe seat is a transparent pipe seat, which is configured to enable a user to observe an internal situation of the pipe seat during assembly.

22. The welded quick-connect fitting according to claim 13, wherein a conical extrusion surface is further provided between the first arc transition surface and the inner circumferential surface of the elastic guide ring, and the second end face is connected to the inner circumferential surface of the elastic guide ring through the first arc transition surface and the conical extrusion surface, and an inner diameter of the conical extrusion surface gradually decreases from a connection with the first arc transition surface to a connection with the inner conical surface.

23. A piping system, **characterized in that** the piping system comprises the welded quick-connect fitting according to any one of claims 1 to 22.

24. A pipeline connection method, **characterized in that** a pipe is connected using the welded quick-connect fitting according to any one of claims 1 to 22, and the pipeline connection method comprises:
inserting the pipe between the inner tube and the shell assembly.
